**Europäisches Patentamt**

(19) **European Patent Office**

**Office européen des brevets**

(11) Publication number : **0 248 505 B1**

(12) **EUROPEAN PATENT SPECIFICATION**

(45) Date of publication of patent specification :
**15.01.92 Bulletin 92/03**

(51) Int. Cl.⁵ : **F15B 7/00, F15B 15/18,**
**F01B 13/06, B62D 33/06**

(21) Application number : **87201072.3**

(22) Date of filing : **05.06.87**

(54) **Hydraulic power source, in particular for tilting the cab of a truck.**

(30) Priority : **06.06.86 NL 8601475**

(43) Date of publication of application :
**09.12.87 Bulletin 87/50**

(45) Publication of the grant of the patent :
**15.01.92 Bulletin 92/03**

(84) Designated Contracting States :
**DE FR GB IT NL SE**

(56) References cited :
**DE-A- 1 601 738**
**DE-A- 1 650 898**
**DE-A- 2 202 825**
**DE-A- 2 545 637**
**FR-A- 1 290 704**
**FR-A- 2 099 846**
**US-A- 3 064 583**
**US-A- 3 374 625**
**US-A- 4 551 973**

(73) Proprietor : **Applied Power Inc.**
**250 Executive Drive**
**Brookfield Wisconsin 53005 (US)**

(72) Inventor : **Sonneborn, Lambertus, Johannes**
**Waterhamskamp 15**
**7576 EM Oldenzaal (NL)**
Inventor : **Oudelaar, Tone**
**Brederostraat 3**
**7576 CA Oldenzaal (NL)**

(74) Representative : **Boelsma, Gerben Harm, Ir. et al**
**Octrooibureau Polak & Charlouis Laan Copes van Cattenburch 80**
**NL-2585 GD Den Haag (NL)**

## Description

The invention relates to a hydraulic power source of the type defined in the introductory part of either of the attached claims 1 and 2.

An hydraulic power source of this type is disclosed in US-A-4551973. This well-known power source constitutes a rather compact power unit, wherein the reversable rotary pump is constituted by a conventional gear pump.

The present invention aims at improving the above power source so as to increase its degree of compactness.

In accordance with one aspect of the invention, this aim is achieved by the features mentioned in the characteristic clause of the attached claim 1. In this connection the term "suction shuttle valve" used in claim 1 is to be understood as comprising two check valve members, each associated with one of said suction/pressure conduits and located each between the said connecting passage and the respective suction/pressure conduit, said check valve members being interconnected in such a manner that one of them is forced into the open position when the other is closed as a result of a pressure increase in the respective suction/pressure conduit.

The special type of pump used in accordance with this aspect of the invention allows the use of much higher working pressures than with a gear pump, so that the size of the piston cilinder device may be reduced quite considerably.

It is to be noted that the type of pump used in the hydraulic power source according to the invention is well-known perse. As an example such a pump is disclosed in FR-A-2099846. It has not been proposed, so far, to use such a pump as a reversable rotary pump in an hydraulic power unit of the type above referred to.

In accordance with a second apsect of the invention the above aim is achieved by the features mentioned in the characteristic clause of appending claim 2.

The pump used in accordance with this second aspect of the invention in fact comprises two super imposed pumps of the type according to the first inventive aspect. The advantage of using two super imposed pumps is to be seen in that no shuttle valve means are required to create a blocking of the connection betwen the pressure side and the reservoir. The invention will be hereinafter further explained by way of example with reference to the accompanying drawings.

Fig. 1 shows a perspective view of a double-acting piston-cylinder device with built-on drive unit according to the invention;

Fig. 2 shows a hydraulic diagram of the drive unit according to the invention, provided with a shuttle valve;

Fig. 3 is a longitudinal section of the lower portion of the device of Fig. 1 and shows a pump adapted to be used in the diagram of Fig. 2 and suitable for supplying high pressures;

Fig. 4 is a cross-sectional view on the line III-III through the pump portion of Fig. 3;

Fig. 5 is a cross-sectional view on the line IV-IV of Fig. 3;

Fig. 6 shows an axial section through the drive unit according to the invention in an embodiment having no shuttle valve;

Fig. 7 is a cross-sectional view of the line VII-VII in Fig. 6 and

Fig. 8 shows the hydraulic diagram of the device of Fig. 6.

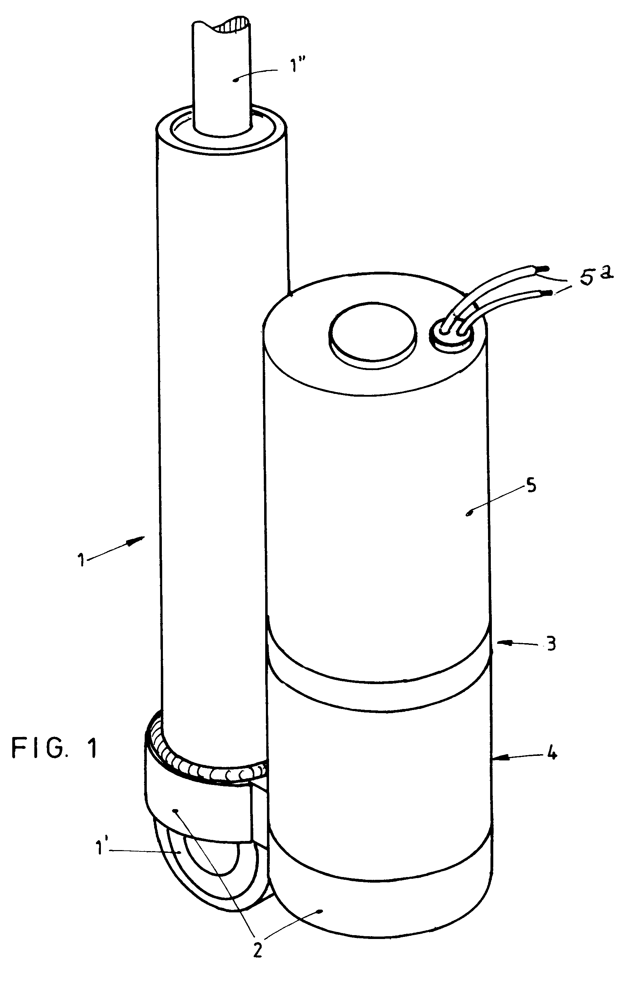

In Fig. 1 the numeral 1 designates a double-acting piston-cylinder device having an eyelet 1' at the cylinder bottom for pivotal connection to the frame of a vehicle equipped with a tilting cabin, while the free end (not shown) of the piston rod 1" is adapted to be pivotally connected to the tilting cabin.

The drive unit 3 which is connected to the piston-cylinder device 1 through a common base 2, comprises a reservoir 4 for hydraulic fluid placed on said base 2, a rotary pump being housed in the reservoir and driven by a reversable electric motor 5. The electric leads to the electric current source of the vehicle are designated at 5a.

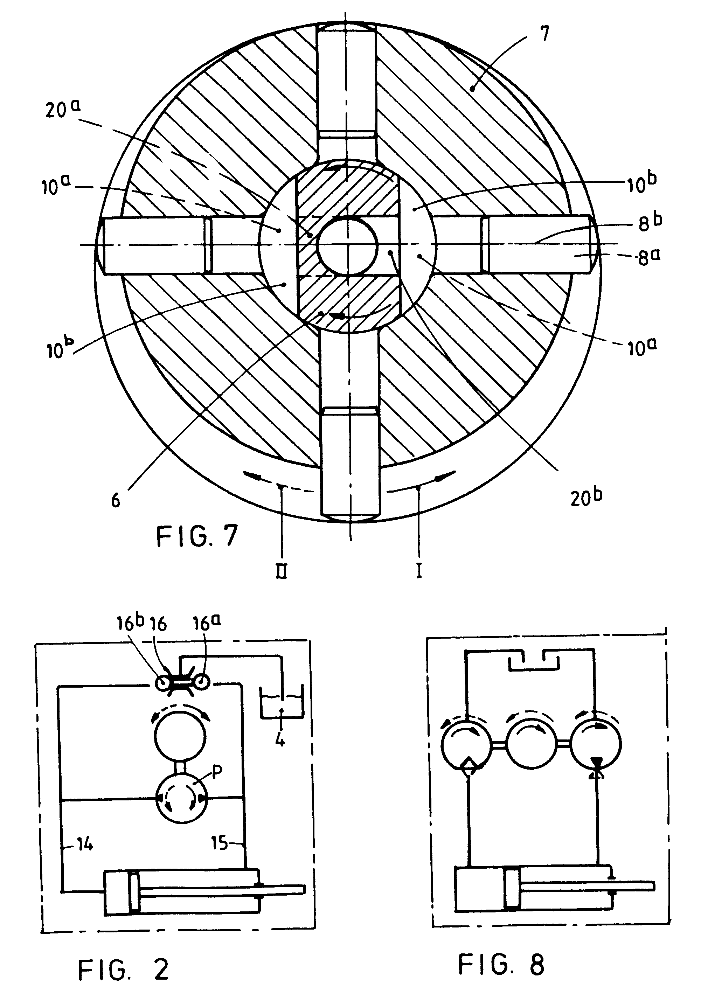

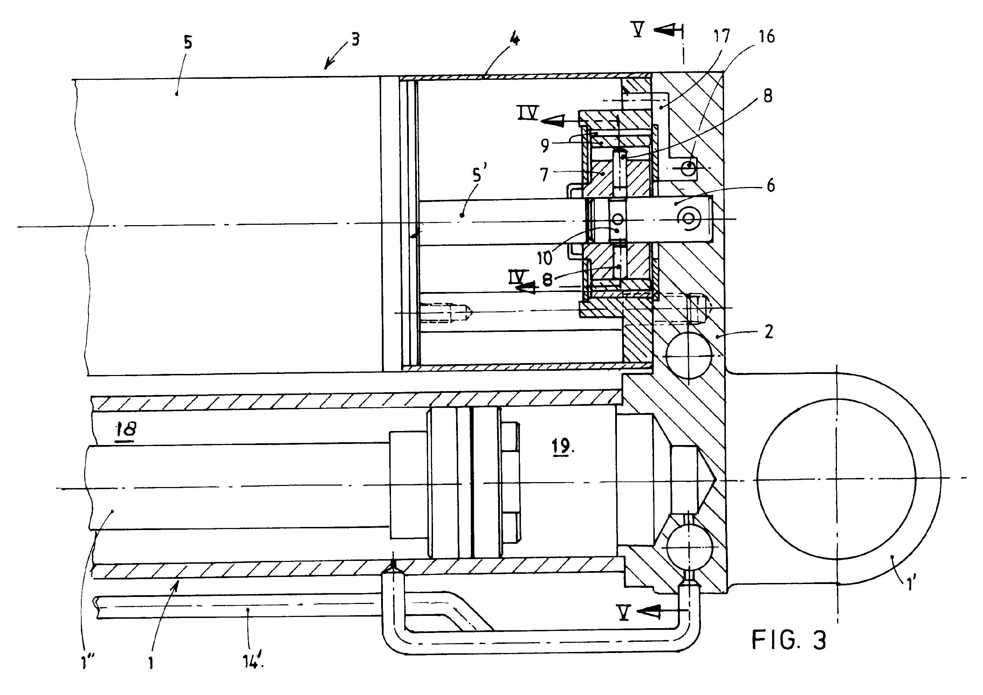

The pump indicated at P in the hydraulic diagram of Fig. 2 will normally be a known type of gear pump. According to the invention, however, it is desired to reduce the diameter of the piston-cylinder device and as a consequence thereof the pump of Fig. 3 is proposed, which is of a type allowing operation at high pressures.

In the embodiment of Fig. 3 the pump comprises a stator 6 fixedly supported at the base 2 and a rotor 7 mounted for rotation around said stator and coupled with the electric motor by shaft 5'. In the rotor 7 there are four plungers 8 slidably mounted in radial bores, which plungers are, when the rotor is rotating, periodically swung outwardly and urged inwardly by a slide bearing ring 9 mounted excentrically around the rotor 7.

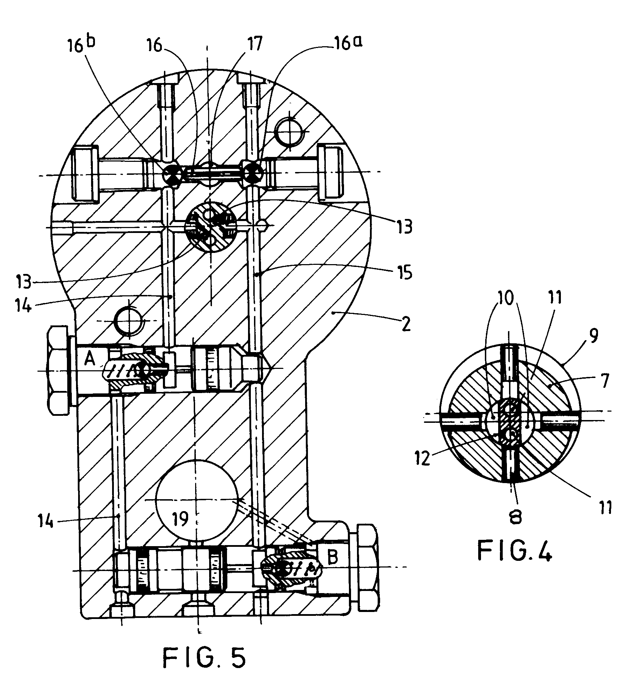

The stator 6 has two rectangular recesses 10 located in the radial cross-sectional plane of the bores of the plungers 8 at two diametrically opposed sides of the stator. Dependent on the direction of rotation of the pump one recess will function as a pressure chamber and the other will function as a suction chamber. Two axial conduits 11 are provided in the stator which are each connected to a recess 10 through a connecting passage 12 (vide fig. 4) and are on the other hand each connected, through a connecting passage 13, to a suction/pressure conduit 14 or 15 extending through the base 2 (vide Fig. 5). The conduits 14 and 15 are connected to connecting passage 17 leading to the reservoir 4 (vide Fig. 2, 3 and 5) via a suction shuttle valve 16. The conduit 14 is also connected to a passage 14′ leading to the cylinder space 18 above the piston of the piston cylinder device (vide Fig. 3) whereas the conduit 15 is in communi-cation with the space 19 under the piston (to the right in Fig. 3 and to the left in Fig. 2).

In the embodiment of Fig. 3-5 the conduits 14 and 15 are provided with pilot operated check valves A and B respectively, which are not directly related to the present invention and therefore have been omitted in the diagram of Fig. 2.

The operation of the device described hereinabove is a follows.

Assuming the direction of rotation of the pump, as seen in Fig. 4, is clockwise, the space 10 on the right side will function as a pressure chamber, while the space 10 on the left side will operate as a suction chamber, As a result of this the conduit 15 will be pressurized.

This causes the ball 16a of the suction shuttle valve 16 (Fig. 5) to be pressed on its seat, whereas the ball 16b is released from its seat. Fluid is sucked into the suction chamber on the left side through conduit 14 and the open ball valve 16b. This fluid is then expelled through the pressure chamber on the right side and supplied under pressure through conduit 15 to the space 19 under the piston of the piston cylinder device 1. At the same time fluid above the piston is allowed to flow off to the suction chamber and reservoir respectively via check valve A which has been opened by the pressure in conduit 15. In the assumed direction of rotation of the pump the piston of the piston cylinder device will thus be moved to the left (as seen in Fig. 3). It will be understood that a reversal of the direction of rotation will involve a change of functions of the spaces 10 so that fluid will then be supplied through left conduit 14 (Fig. 5) to the space above the piston, whereas the fluid under the piston is allowed to flow off to the suction chamber on the right (as seen in Fig. 4) and the reservoir respectively via the opened valve B and right-hand conduit 15.

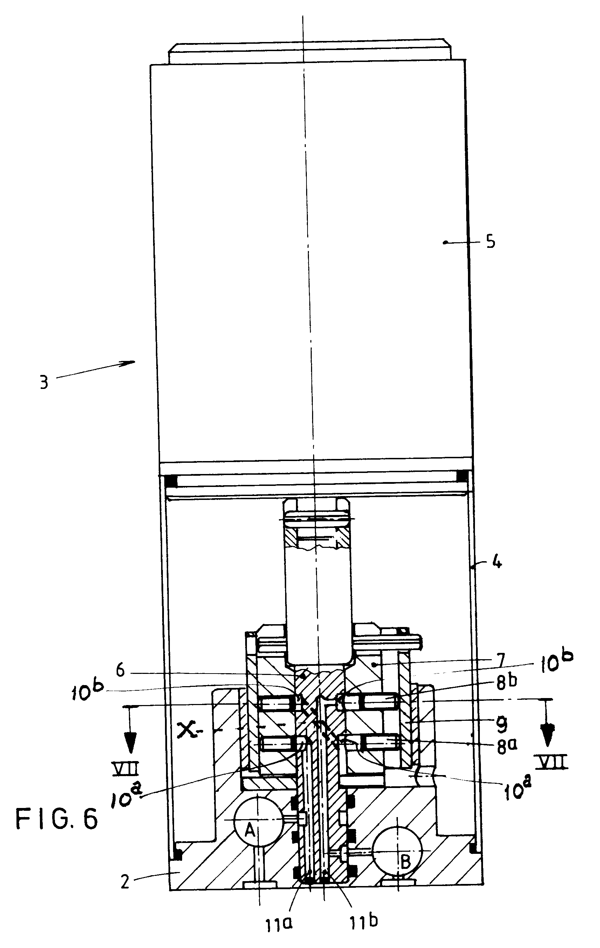

In the embodiment of Fig. 6-8 the rotor comprises two superimposed groups of each four plungers, i.e. a lower group 8a and an upper group 8b at the level of each group the stator 6 has two diametrically opposed recesses 10a and 10b respectively. The right-hand space of the lower two recesses or spaces 10a is permanently connected to the reservoir, whereas the left-hand space of the upper two spaces 10b is permanently connected to the reservoir. The left-hand space of the lower two spaces 10a is connected, via a connecting bore 20a, to an axial passage 11a, which has a permanent connection, via valve A, with one end of the piston-cylinder device. The right-hand space of the upper two spaces 10b is, via a connecting bore 20b and valve B, permanently connected to the other end of the piston-cylinder device.

In this case the operation is as follows:

Assuming that the pump is driven in the direction of the full arrow (anti-clockwise as seen in Fig. 7) the right-hand space 10b will function as a pressure chamber, from which hydraulic fluid will be pressed through axial passage 11b to the cylinder space on the piston rod side. In this case the left-hand space 10b is functioning, via connecting passage X, as a suction chamber. Via the open valve A hydraulic fluid may flow off from the cylinder space above the piston to the left-hand space 10a acting likewise as a suction chamber. When the direction of rotation is reversed the left-hand space 10a will become active as a pressure chamber, whereas the right-hand space 10b′ will function as a suction chamber and collect hydraulic fluid from the cylinder space under the piston through the open valve B. An advantage of the second embodiment over the first one is be seen in that no suction shuttle valve is required.

## Claims

1. A hydraulic power source, in particular for tilting the cab of a truck, comprising a double-acting hydraulic piston-cylinder device (1) and a unit (3) for driving the latter, said device and unit being juxtaposed and mounted on a common base (2), wherein said drive unit (3) is composed of a reservoir (4) and a pump (P) for hydraulic fluid, and a reversible electric motor (5) connected for driving said pump, the pump being of the type comprising a housing (6, 9) and a rotary fluid displacement means (7) therein, whereby a reversal of the direction of rotation causes an automatic change of the pressure and suction sides, while each of the hydraulic cylinder ends has a permanent connection with one of the (suction or pressure) conduits (14, 15) of the pump, the reservoir (4) being connected to both conduits (14, 15) of the pump (P) and valve means (16) being provided to cause - dependent of the direction of rotation - the connection between the reservoir and the pressure side of the pump to be blocked, characterized in that the pump is of the type, in which the pump housing comprises a stator (6) which is surrounded by said fluid displacement means as a rotor (7), the latte being coupled with said electric motor and being provided with plungers (8) which are movable in substantially radial bores, said plungers (8) being periodically urged - by a stator ring (9) surrounding said rotor excentrically - to move forth and back when the rotor (7) is rotating, the stator (6) having two diametrically opoosed recesses (10) in the radial sectional plane of the plungers (8), which recesses are adapted to function, in dependence of the direction of rotation, as a pressure and suction chamber respectively and are each, via a passage (11) extending through the stator (6), connected to said suction and pressure conduits (14, 15) respectively, said suction and pressure conduits (14, 15) being on one hand, via said valve means - which is performed as a suction shuttle valve (16) - connected to a connecting passage (17) leading to the reservoir and are on the other hand each leading to a connecting port for the hydraulic cylinder device.

2. A hydraulic power source, in particular for tilting the cab of a truck, comprising a double-acting hydraulic piston-cylinder device (1) and a unit (3) for driving the latter, said device and unit being juxtaposed and mounted on a common base (2), wherein said drive unit (3) is composed of a reservoir (4) and a pump (P) for hydraulic fluid, and a reversible electric motor (5) connected for driving said pump (P), the pump being of the type comprising a housing (6, 9) and a rotary fluid displacement means (7) therein, whereby a reversal of the direction of rotation causes an automatic change of the pressure and suction sides, while each of the hydraulic cylinder ends has a permanent connection with one of the (suction or pressure) conduits (14, 15) of the pump, the reservoir (4) being connected to both conduits (14, 15) of the pump (P) and provisions being made to cause-dependent of the direction of rotation - the connection between the reservoir and the pressure side of the pump to be blocked, characterized in that the pump (P) is of the type, in which the pump housing (6, 9) comprises a stator (6) which is surrounded by said fluid displacement means as a rotor (7), the latter being coupled with said electric motor and being provided with two groups of plungers (8a, 8b) located in different radial planes and which are movable in substantially radial bores, said plungers (8) being periodically urged - by a stator ring (9) surrounding said rotor (7) excentrically - to move back and forth when the rotor (7) is rotating, the stator (6) having two diametrically opposed recesses (10a, 10b) in the radial sectional plane of each group of plungers (8a, 8b), one recess of one group of recesses (10a) being in communication with the diametrically opposed one of the second group of recesses (10b) and with the reservoir, whereas the other two recesses (10a and 10b respectively) are each connected to a connecting port of the piston-cylinder device.

**Patentansprüche**

1. Leistungshydralikanlage, insbesondere zum kippen der Fahrerkabine von Lastkraftwagen, mit einer doppelwirkenden hydraulischen Kolben-Zylindervorrichtung (1) und einer Einheit (3) zum Antreiben der letzteren, welche Vorrichtung und Einheit nebeneinader auf einem gemeinsamen Fuss (2) montiert sind, wobei die Antriebseinheit (3) aus einem Behälter (4) und einer Pumpe (P) für hydraulische Flüssigkeit, und einem Elektromotor (5) mit umkehrbarer Drehrichtung zum Antrieben der Pumpe zusammengesetzt ist, welche Pumpe vom Typ ist, bestehend aus einem Gehäuse (6, 9) und einem in diesem vorgesehenen, drehbaren Flüssigkeit-verdrängenden Organ (7), wobei eine Umkehrung der Drehrichtung eine automatische Wechslung der Druck- und Saugseiten bewirkt, während jedes Ende des hydraulischen Zylinders eine ständige Verbindung mit einer der (Saug- oder Druck-)leitungen (14, 15) der Pumpe hat, der Behälter (4) mit beiden Leitungen (14, 15) der Pumpe (P) verbunden ist und Ventilmittel (16) vorgesehen sind um - abhängig von der Drehrichtung - eine Blockierung zwischen dem Behälter und der Druckseite der Pumpe zu bewirken, dadurch gekennzeichnet, dass die Pumpe von Typ ist, wobei das Pumpengehäuse einen Stator (6) enthält, der vom einen Rotor (7) bildenden Flüssigkeit-verdrängenden Organ umgeben wird, welcher Rotor mit dem Elektromotor gekuppelt ist und mit in etwas radialen Bohrungen bewegbaren Kolben (8) versehen ist, welche Kolben (8) bei drehendem Rotor (7) durch einen den Rotor exzentrisch umgebenden Statorring (9) periodisch hin und herbewegt werden, wobei der Stator (6) in der radialen Schnittebene der Kolben (8) zwei einander diametral gegenüberliegenden Aussparungen (10) aufweist, welche Aussparungen dazu geeignet sind, in Abhängigkeit der Drehrichtung, wie eine Druck- bezw. Saugkammer zu arbeiten und welche je über einen sich durch den Stator (6) erstreckenden Durchgang (11) mit den Saug- bezw. Druckleitungen (14, 15) verbunden sind, welche Saug- und Druckleitungen (14, 15) einerseits, über die wie ein Saug-Wechselventil (16) ausgebildeten Ventilmittel mit einer zum Behälter führenden Verbindungsleitung verbunden sind und andererseits je zu einer Anschlussstelle für die hydraulische Zylindervorrichtung führen.

2. Leistungshydraulikanlage, insbesondere zum Kippen der Fahrerkabine von Lastkraftwagen, mit einer doppelwirkenden hydraulischen Kolben-Zylindervorrichtung (1) und einer Einheit (3) zum Antreiben der letzteren, welche Vorrichtung und Einheit nebeneinander auf einem gemainsamen Fuss (2) montiert sind, wobei die Antriebseinheit (3) aus einem Behälter (4) und einer Pumpe (P) für hydraulische Flüssigkeit, und einem Elektromotor (5) mit umkehrbarer Drehrichtung zum Antreiben der Pumpe zusammengesetzt ist, welche Pumpe von Typ ist, bestehend aus einem Gehäuse (6, 9) und einem in diesem vorgesehenen, drehbaren Flüssigkeit-verdrängenden Organ (7), wobei eine Umkehrung der Drehrichtung eine automatische Wechslung der Druck- und Saugseiten bewirkt, während jedes Ende des hydraulischen Zylinders eine ständige Verbindung mit einer der (Saug- oder Druck-)leitungen (14, 15) der Pumpe hat, der Behälter (4) mit beiden Leitungen (14, 15) der Pumpe (P) verbunden ist und Ventilmittel (16) vorgesehen sind um - abhängig von der Drehrichtung - eine Blockierung zwischen dem Behälter und der Druckseite der Pumpe zu bewirken, dadurch gekennzeichnet, dass die Pumpe vom Typ ist, wobei das Pumpengehäuse (6, 9) wie ein Stator (6) ausgebildet ist, welcher von dem wie ein Rotor (7) ausgebildeten Flüssigkeit-verdrängenden organ umgeben wird, welcher Rotor mit dem Elektromotor gekuppelt ist und mit zwei Gruppen von in unterschiedlichen radialen Ebenen angeordneten und in etwa radialen Bohrungen bewegbaren Kolben (8a, 8b) versehen ist, welche Kolben (8) bei drehendem Rotor (7) periodisch durch einen den Rotor (7) exzentrisch umgebenden Statorring (9) hin und herbwegt werden, wobei der Stator (6) in der radialen Schnitteben jeder Gruppe von Kolben (8a, 8b) zwei einander diametral gegenüberliegende Aussparungen (10a, 10b) aufweist, wobei eine Aussparung der einen Gruppe von Aussparungen (10a) in Verbindung steht mit der diametral gegenüberliegenden Aussparung der zweiten Gruppe von Aussparungen (10b) und mit dem Behälter, während die beiden anderen Aussparungen (10a bezw. 10b) je mit einer Anschlussstelle für die Kolben-Zylindervorrichtung verbunden sind.

## Revendications

1. Installation hydraulique de puissance, en particulier pour le basculement d'une cabine de conduite de camion, comprenant un dispositif piston-cylindre hydraulique à double effet (1) et une unité (3) pour commander ce dernier, ledit dispositif et l'unité étant juxtaposés et montés sur une base commune (2), dans laquelle ladite unité d'entraînement (3) est composée d'un réservoir (4), d'une pompe P pour fluide hydraulique, et d'un moteur électrique réversible (5) relié pour un entraînement à ladite pompe, la pompe étant du type comprenant un logement (6, 9) et un moyen de déplacement de fluide (7) à l'intérieur, dans laquelle une inversion de la direction de rotation entraîne un changement automatique des côtés d'aspiration et de pression, tandis que chacune des extrémités du cylindre hydraulique a une liaison permanente avec l'un des conduits (aspiration ou pression)(14, 15) de la pompe, le réservoir (4) étant relié aux deux conduits (14, 15) de la pompe P et un moyen formant soupape (16) étant prévu pour entraîner-en fonction de la direction de rotation-la liaison entre le réservoir et le côté de pression de la pompe à être bloquée, caractérisé en ce que la pompe est du type, dans laquelle le logement de pompe comprend un stator (6) qui est entouré par ledit moyen de déplacement de fluide comme un rotor (7), ce dernier étant couplé avec ledit moteur électrique et étant pourvu de pistons plongeurs (8) qui sont mobiles dans des trous sensiblement radiaux, lesdits plongeurs (8) étant périodiquement poussés-par un anneau de stator (9) entourant ledit rotor excentriquement-à se déplacer d'avant en arrière lorsque le rotor (7) est entraîné en rotation, le stator (6) ayant deux logements diamétralement opposés (10) dans le plan en coupe radiale des plongeurs (8), lesquels logements sont adaptés à fonctionner, en fonction de la direction de rotation, comme une chambre d'aspiration et de pression respectivement et sont chacun, via un passage (11) s'étendant à travers le stator (6), reliés auxdits conduits d'aspiration et de pression (14, 15) respectivement, lesdits conduits d'aspiration et de pression (14, 15) étant d'une part, via ledit moyen formant soupape-qui est réalisé comme une soupape à alternance d'aspiration (16)-reliés à un passage de liaison (17) conduisant au réservoir et sont d'autre part chacun menant vers un orifice de liaison pour le dispositif à cylindre hydraulique.

2. Installation hydraulique de puissance, en particulier pour le basculement d'une cabine de conduite de camion, comprenant un dispositif piston-cylindre hydraulique à double effet (1) et une unité (3) pour entraîner ce dernier, lesdits dispositif et unité étant juxtaposés et montés sur une base commune (2), dans laquelle ladite unité de commande (3) est composée d'un réservoir (4), d'une pompe P pour fluide hydraulique, et d'un moteur électrique réversible (5) relié pour un entraînement à ladite pompe P, la pompe étant du type comprenant un logement (6, 9) et un moyen de déplacement de fluide rotatif (7) à l'intérieur, dans laquelle une inversion de la direction de rotation entraîne un changement automatique des côtés d'aspiration et de pression, tandis que chacune des extrémités du cylindre hydraulique a une liaison permanente avec l'un des conduits (aspiration ou pression) (14, 15) de la pompe, le réservoir (4) étant relié aux deux conduits (14, 15) de la pompe P et des dispositions étant prises pour entraîner -en fonction de la direction de rotation- la liaison entre le réservoir et le côté de pression de la pompe à être bloquée, caractérisée en ce que la pompe P est du type, dans laquelle le logement de pompe (6, 9) comprend un stator (6) qui est entouré par ledit moyen de déplacement de fluide tel un rotor (7), ce dernier étant couplé avec ledit moteur électrique et étant pourvu de deux groupes de piston plongeur (8a, 8b) localisés dans différents plans radiaux et qui sont mobiles dans des trous sensiblement radiaux, lesdits pistons plongeurs (8) étant périodiquement poussés- par un anneau de stator (9) entourant ledit rotor (7) excentriquement- à se déplacer d'avant en arrière lorsque le rotor (7) est entraîné en rotation, le stator (6) ayant deux logements diamétralement opposés (10a 10b) dans le plan en coupe radiale de chaque groupe de pistons plongeurs (8a 8b), un logement d'un groupe de logement (10a) étant en communication avec celui diamétralement opposé du second groupe de logements (10b) et avec le réservoir, tandis que les deux autres logements (10a et 10b respectivement) sont reliés chacun à un orifice de liaison du dispositif piston cylindre.

FIG. 1

FIG. 7

FIG. 2

FIG. 8

FIG. 3

EP 0 248 505 B1

FIG. 5

FIG.4

FIG. 6